(19) Europäisches Patentamt
European Patent Office
Office européen des brevets

(11) Veröffentlichungsnummer: **0 442 336 B1**

# (12) EUROPÄISCHE PATENTSCHRIFT

(45) Veröffentlichungstag der Patentschrift: **30.08.95**

(51) Int. Cl.[6]: **C09D 7/02**, C08L 75/02

(21) Anmeldenummer: **91101390.2**

(22) Anmeldetag: **02.02.91**

## (54) Antiabsetzmittel für flüssige, härtbare Mischungen.

(30) Priorität: **10.02.90 DE 4004060**

(43) Veröffentlichungstag der Anmeldung:
**21.08.91 Patentblatt 91/34**

(45) Bekanntmachung des Hinweises auf die Patenterteilung:
**30.08.95 Patentblatt 95/35**

(84) Benannte Vertragsstaaten:
**BE DE ES FR GB IT NL**

(56) Entgegenhaltungen:
**EP-A- 0 104 283**
**EP-A- 0 292 702**
**EP-A- 0 335 197**

(73) Patentinhaber: **HOECHST AKTIENGESELLSCHAFT**
**D-65926 Frankfurt am Main (DE)**

(72) Erfinder: **Brindöpke, Gerhard, Dr. Dipl.-Chem.**
**Kaiser-Konrad-Weg 26**
**W-6231 Sulzbach (DE)**
Erfinder: **Just, Christoph, Dr. Dipl.-Chem.**
**Akazienstrasse 6**
**W-6272 Niedernhausen (DE)**
Erfinder: **Kubillus, Uwe, Dr. Dipl.-Chem.**
**Scharper Strasse 11**
**W-6200 Wiesbaden (DE)**
Erfinder: **Plum, Helmut, Dr. Dipl.-Chem.**
**Nibelungenstrasse 3**
**W-6204 Taunusstein (DE)**

**EP 0 442 336 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Der Einsatz von Polyharnstoffen als Antiablaufmittel (sog. "sag-control agents") in niedrigviskosen Lacksystemen ist bekannt (vgl. DE-Offenlegungsschrift 2.360.019 und EP-Offenlegungsschriften 192.304, 260.430 und 300 388). Die Aufgabe dieser Substanzen besteht dabei darin, das Ablaufen des niedrigviskosen Lackes an senkrechten Flächen zu verhindern.

Daneben sind in neuerer Zeit eine Reihe von isocyanatfreien 2-Komponenten-Lacksystemen bekannt geworden, die über eine Additionsreaktion von H-aciden Verbindungen an aktivierte Doppelbindungen enthaltenden Bindemittel vernetzen (vgl. DE-Offenlegungsschriften 3 541 410, 3 710 341 und 3 733 182 sowie EP-Offenlegungsschriften 160 824, 161 697 und 203 296). In verschiedenen Fällen bedürfen diese Systeme einer Katalyse durch mehr oder weniger stark basische Verbindungen. Sie zeichnen sich, da sie ohne die Verwendung von freien Isocyanaten vernetzen, durch hohe Anwenderfreundlichkeit und gute Umweltverträglichkeit aus.

Falls diese isocyanatfreien Systeme Pigmente enthalten, tritt häufig nach Zugabe des Härters und/oder des Katalysators, eine Agglomeration der Pigmente ein unter Bildung eines starken Bodensatzes. Dieser Effekt ist unerwünscht und führt zu einer schlechteren Qualität des Lackfilms.

Stand der Technik ist, solche Ausscheidungen durch Verwendung von sogenannten "Antiabsetzmitteln" zu vermeiden. Bei den gebräuchlichen Antiabsetzmitteln handelt es sich chemisch um die verschiedensten Stoffe. So werden hierfür z.B. pyrogene Kieselsäuren, modifizierte Al-silikate, hydriertes Rizinusöl oder polymere Verbindungen mit Amidstrukturen (s.a. Glasurit-Handbuch; Lacke und Farben; C.R. Vincentz-Verlag; 11. Auflage, 1984, S. 114) eingesetzt. Diese Verbindungen zeigen jedoch in den erwähnten isocyanatfreien 2-Komponenten-Systemen bei vielen Pigmentkombinationen keine ausreichende Wirksamkeit.

Die EP-A 0 292 702 beschreibt eine Zusammensetzung, die ein dispergiertes Pigment enthält. Als Dispergiermittel wird ein Reaktionsprodukt aus mindestens einem Polyamin und mindestens einem Polyisocyanat verwendet, wobei beide Bestandteile eine Funktionalität von mindestens 2 aufweisen. Die Reaktionsprodukte sind Polymere, bei Funktionalität über 2 vernetzte Polymere.

Diese Zusätze setzen die Thixotropie der erhaltenen Zusammensetzungen stark herab, indem die Viskosität gegenüber dem Vergleich ohne Zusatz bei niedrigerer Geschwindigkeit erniedrigt, bei höherer Geschwindigkeit aber erhöht wird. Dieser Effekt ist unerwünscht.

Die EP-A 0 104 283 beschreibt Glanzverbesserungsmittel, die Reaktionsprodukte von Polyisocyanaten mit Fettaminen und Alkyl- bzw. Alkanolaminen sowie gegebenenfalls Aminosilanen sind. Dabei enthalten die gebildeten Verbindungen jeweils einen Rest eines (langkettigen) Fettamins und einen Rest eines Alkyl- oder Alkanolamins, gegebenenfalls auch den Rest eines Aminosilans. Die Wirkung dieser Glanzverbesserer beruht auf dem amphiphilen Charakter der Verbindungen, wobei der Rest des Fettamins den hydrophoben Molekülteil bildet, während der Rest des niedrigen Alkylamins oder besonders der eines Alkanolamins den hydrophilen Molekülteil bildet. Besonders geeignet sind diese Verbindungen als Glanzverbesserer in Lacken, die Metallschuppen enthalten.

Aufgabe der Erfindung war es daher, Substanzen bereitzustellen, die dieses Absetzen der Pigmente im noch reaktiven aber noch nicht applizierten Lack weitgehend verhindern und die, guten anwendungstechnischen Eigenschaften nicht beeinträchtigen.

Diese Aufgabe wird überraschender Weise dadurch gelöst, daß man Verbindungen mit Harnstoffgruppen als Antiabsetzmittel einsetzt.

Die Erfindung betrifft daher die Verwendung einer Harnstoffgruppen tragenden Verbindung (A) als Antiabsetzmittel zur Vermeidung der Pigmentabsetzung in härtbaren, flüssigen und pigmenthaltigen Mischungen.

Weiterhin bezieht sich die Erfindung auf bestimmte, härtbare, flüssige Mischungen, welche diese Antiabsetzmittel enthalten.

Die erfindungsgemäß als Antiabsetzmittel (A) eingesetzten Verbindungen sind an sich bekannt und beispielsweise in den DE-Offenlegungsschriften 2 360 019 und 2 751 761 sowie den EP-Offenlegungsschriften 192 304, 260 430 und 300 388 beschrieben. Sie werden durch Umsatz einer mindestens eine primäre oder sekundäre Aminogruppe enthaltenden Verbindung (a) mit einer mindestens eine Isocyanatgruppe enthaltenden Verbindung (b) sowie gegebenenfalls weiteren monofunktionellen Verbindungen (c), hergestellt. Sie weisen mindestens eine, vorzugsweise 1 bis 5 Harnstoffgruppen im Molekül auf und besitzen im allgemeinen ein mittleres Harnstoffäquivalentgewicht von 50 bis 1000, vorzugsweise 100 bis 500 (= Menge in g, die eine Harnstoffgruppierung enthält, rechnerisch ermittelt). Vorzugsweise ist (A) in den benutzten Lösungsmitteln bzw. in dem System Lösungsmittel/Verbindung (B) schwerlöslich.

In einer vorteilhaften Ausführungsform der Herstellung des Antiabsetzmittels (A) wird ein Monoamin (a) mit einem Polyisocyanat (b) oder einem Monoisocyanat (b) umgesetzt.

In einer anderen Ausführungsform kann das Monoamin (a) auch mit einer Mischung aus einem Monoisocyanat (b) und einem Polyisocyanat (b) zur Reaktion gebracht werden.

Gemäß einer weiteren Ausführungsform wird eine Mischung aus Monoamin (a) und einer Polyaminoverbindung (a) mit einem Monoisocyanat (b) und/oder einem Polyisocyanat (b) umgesetzt.

Schließlich kann das Polyamin und/oder Monoamin (a) auch in Mischung mit der monofunktionellen Verbindung (c) zur Reaktion mit dem Polyisocyanat (b) gebracht werden.

Als aminische Komponente (a) zur Herstellung von (A) kommen zum Beispiel Monoamine in Frage. Als solche eignen sich insbesondere geradkettige oder verzweigte, primäre oder sekundäre aliphatische Monoamine mit gesättigten oder ungesättigten Gruppen, z.B. Alkenylamine oder Alkylamine. Geeignet sind ferner cycloaliphatische oder araliphatische Amine und Hydroxyamine. Beispielhaft seien als geeignete Monoamine erwähnt: Ethylamin, n-Propylamin, Isopropylamin, n-Butylamin, sek.-Butylamin, tert.-Butylamin, n-Pentylamin, n-Hexylamin, $\alpha$- Methylbutylamin, N-Ethylpropylamin, $\beta$-Ethylbutylamin, N-Methylbutylamin, Benzylamin und Cyclohexylamin. Geeignete Hydroxyamine sind Monohydroxyamine, wie 2-Aminoethanol, 2-Aminopropanol, 3-Aminopropanol, 1-Amino-2-propanol, 2-Amino-3-pentanol und Polyhydroxymonoamine, wie 2-Amino-2-methyl-1,3-propandiol und 2-Amino-2-ethyl-1,3-propan-diol. Bevorzugt verwendet werden aliphatische und araliphatische Monoamine mit 1 bis 20, vorzugsweise 1 bis 10, aliphatischen Kohlenstoffatomen, wie Benzylamin, Phenylethylamin, Hexylamin, Furfurylamin, Propylamin und tert.-Butylamin. Es können Gemische von einem oder mehreren Monoaminen und einem oder mehreren Monohydroxyaminen und/oder Polyhydroxymonoaminen verwendet werden.

Die als Komponenten (a) auch möglichen Polyamine, insbesondere Diamine, enthalten mindestens zwei primäre und/oder sekundäre Aminogruppen. Daneben können sie auch noch andere Substituenten tragen, sofern diese die Reaktion mit der Isocyanatkomponente (b) nicht behindern. Beispiele für derartige Polyamine (b) sind: Ethylendiamin, 1,2-Diaminopropan, 1,3-Diaminopropan, 1,3-Diaminobutan, 1,4-Diaminobutan, 1-Amino-3-methylaminopropan, 2-Methylpentamethylendiamin, Pentamethylendiamin, Hexamethylendiamin, Trimethylhexamethylendiamin, Neopentyldiamin, Octamethylendiamin, cycloaliphatische Diamine wie 1,2-, 1,3- oder 1,4-Cyclohexandiamin; 4,4'-Methylen-bis-cyclohexylamin, Isophorondiamin, 4,4'-Diamino-3,3'-dimethyl-dicyclohexylmethan, Xylylendiamin, Diethylentriamin. Besonders bevorzugt sind Isophorondiamin, Hexamethylendiamin, m-Xylylendiamin und Trimethylhexamethylendiamin. Es können auch Mischungen dieser Art eingesetzt werden. Auch Polyoxyalkylenamine mit mindestens einer Oxyalkylengruppe sowie mindestens zwei vorzugsweise primären Aminogruppen können hierfür eingesetzt werden, wie aliphatische Polyoxipropylen-di- oder triamine sowie Etherdiamine, z.B. 1,7-Diamino-4-oxa-heptan, 1,7-Diamino-3,5-dioxa-heptan oder 1,10-Diamino-4,7-dioxa-decan.

Monoisocyanate, die als Komponente (b) zur Herstellung des Antiabsetzmittels (A) verwendet werden können, sind aliphatische, aromatische und/oder cycloaliphatische Monoisocyanate. Die aliphatischen Monoisocyanate können beispielsweise bis zu 25 C-Atome aufweisen. Sowohl hier wie bei den aromatischen bzw. cycloaliphatischen Monoisocyanaten sind technisch leicht zugängliche und preiswerte Verbindungen besonders bevorzugt. Beispiele sind: Alkylisocyanate, wie Ethylisocyanat, Propylisocyanat, n-Butylisocyanat, tert.-Butylisocyanat, Stearylisocyanat, und/oder aromatische Isocyanate wie Phenylisocyanat, 1-Naphthylisocyanat, Toluylisocyanat oder auch cycloaliphatische Isocyanate wie Cyclohexylisocyanat.

Als Komponente (b) zur Herstellung von (A) kommen auch Poly-, insbesondere Diisocyanate in Frage, wie aliphatische, cycloaliphatische, araliphatische, aromatische und heterocyclische Polyisocyanate. Beispiele für derartige, erfindungsgemäß einsetzbaren Polyisocyanate sind Tetramethylendiisocyanat, Hexamethylendiisocyanat, 2.2.4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan ( = Isophorondiisocyanat, IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyldiphenylmethan, Naphthylen-1,5-diisocyanat, Triphenylmethan-4,4'-4''-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophonatgruppen, Isocyanuratgruppen, Urethangruppen, acylierte Harnstoffgruppen und Biuretgruppen aufweisende Polyisocyanate. Einsetzbar sind ferner auch die bekannten Polyisocyanate, die hauptsächlich bei der Herstellung von Lacken verwendet werden, z.B. Tris-(6-Isocyanatohexyl)-biuret oder -isocyanurat sowie niedermolekulare, Urethangruppenaufweisende Polyisocyanate, wie sie durch Umsetzung von im Überschuß eingesetztem IPDI mit einfachen mehrwertigen Alkoholen des Molekulargewichtsbereiches von 62-300, insbesondere mit Trimethylolpropan erhalten werden können. Selbstverständlich können auch beliebige Gemische der

genannten Polyisocyanate zur Herstellung der erfindungsgemäßen Produkte eingesetzt werden.

Als Komponente (c) sind beispielsweise Monoalkohole, wie Ethanol, Propanol, Butanol, Butylglykol, Benzylalkohol zu nennen.

Falls sowohl die Komponente (a) als auch (b) multi(di)-funktionell sind, empfiehlt sich die Mitverwendung einer monofunktionellen Verbindung (a) und/oder (b) und/oder (c), um eine Gelierung zu vermeiden.

Besonders bevorzugt zur Herstellung von (A) ist die Umsetzung von einem Monoamin (a) mit einem Diisocyanat (b).

Die Komponente (a) (Mono- und/oder Polyamin) wird mit der Komponente (b) (Mono- und/oder Polyisocyanat) sowie gegebenenfalls (c) dabei in solchen Mengenverhältnissen zur Reaktion gebracht, daß auf jede Isocyanatgruppe mindestens eine damit reaktionsfähige Gruppe, insbesondere Aminogruppe, kommt. Bevorzugt sind Umsetzungsprodukte, in welchen 5 bis 100, insbesondere 80 bis 100 Äquivalent-% der Aminogruppen des Mono- bzw. Polyamins mit den Isocyanatgruppen des Mono- bzw. Polyisocyanats umgesetzt sind.

Das erfindungsgemäße Antiabsetzmittel (A) kann separat hergestellt werden und danach vorzugsweise der doppelbindungshaltigen Verbindung (B) oder gegebenenfalls auch der fertigen flüssigen, härtbaren Mischung zugegeben werden.

Eine vorteilhafte Alternative besteht darin, (A) in Gegenwart von (B) in situ herzustellen. Dabei findet überraschenderweise keine merkliche Nebenreaktion zwischen der aminischen Komponente (a) und den aktivierten Doppelbindungen von (B) statt. Die Komponenten (a) und (b) für die in situ-Herstellung von (A) werden in einem solchen Verhältnis zueinander umgesetzt, daß das entstehende Produkt praktisch isocyanat- und aminogruppenfrei ist. Eine vorteilhafte Variante besteht dabei darin, das Amin vor der Reaktion mit dem Isocyanat mit Kohlendioxyd umzusetzen, um die Nebenreaktion der Aminogruppen mit den aktivierten Doppelbindungen ganz zu unterdrücken und um eine bessere Verteilung des Harnstoffs im Bindemittel zu erzielen. Im Folgeschritt wird das so blockierte Amin mit dem Isocyanat zur Reaktion gebracht.

Erfindungsgemäß werden die Antiabsetzmittel (A) in einer Menge von zweckmäßigerweise 1 bis 30 Gew.-%, bevorzugt 1 bis 15 Gew.-%, bezogen auf Verbindung (B), eingesetzt.

Als Verbindungen (B), die mindestens zwei freie, aktivierte Doppelbindungen enthalten, sind die hierfür bekannten Verbindungen geeignet, wie sie beispielsweise in den DE-Offenlegungsschriften 3 710 431 sowie in den EP-Offenlegungsschriften 160 824 (85/F 036 J), 224 158 (85/F 257) und 310 011 (87/F 295) beschrieben sind, auf die hiermit, einschließlich der bevorzugten Ausführungsformen, Bezug genommen wird. Unter aktivierter Doppelbindung soll hierbei eine C=C Doppelbindung verstanden werden, die durch mindestens eine elektronegative Gruppe am $\alpha$-ständigen C-Atom in ihrer Reaktivität, insbesondere im Hinblick auf Additionsreaktionen, gesteigert ist.

Vorzugsweise enthalten die Verbindungen (B) mindestens zwei Gruppen der Formel (I),

$$R^1R^2C = CR^2\text{-}B\text{-} \qquad (I)$$

in der bedeuten:

- $R^1$ = Wasserstoff oder ein Kohlenwasserstoffrest, vorzugsweise ein Alkylrest, mit 1 bis 12, vorzugsweise mit 1 bis 4 C-Atomen, wie die Methyl-, Ethyl-, n-Propyl-, iso-Propyl-, n-Butyl- oder tert.-Butylgruppe;
- $R^2$ = gleich oder verschieden und Wasserstoff, ein Kohlenwasserstoffrest, vorzugsweise Alkylrest, mit 1 bis 10, vorzugsweise 1 bis 4 C-Atomen, eine Estergruppe $CO_2R^3$ , eine -CN-, $-NO_2$-, $-CONHR^3$-, $-CONR^3R^3$ oder $-COR^3$-Gruppe, wobei $R^3$ für einen Kohlenwasserstoffrest, vorzugsweise einen Alkylrest mit 1 bis 12, vorzugsweise 1 bis 6 C-Atomen steht, der auch durch Sauerstoff oder einen N-Alkylrest unterbrochen sein kann;
- B =

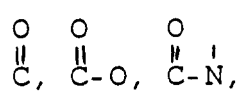

wobei die beiden letzteren Gruppen über das C-Atom an die $CR^2$-Gruppe gebunden sind.

Bevorzugt stehen $R^1$ und $R^2$ in der obigen $R^1R^2C$-Gruppe jeweils für Wasserstoff.

Besonders bevorzugt sind als (B) Umsetzungsprodukte von Acrylsäure und/oder Methacrylsäure mit epoxidgruppenhaltigen Acrylat- oder Epoxidharzen, sowie Ester dieser Säuren mit OH-gruppenhaltigen Polyestern, Polyepoxiden, Polyolen, Polyurethanen oder Polyamiden.

Das C = C-Äquivalentgewicht der Komponente (B) liegt im allgemeinen zwischen 85 und 2000, vorzugsweise zwischen 180 und 1500 und das Molekulargewicht $\overline{M}_w$ in der Regel zwischen 170 und 60 000, vorzugsweise 500 und 40 000.

Die härtbaren Mischungen gemäß der Erfindung enthalten vorzugsweise auch ein Vernetzungsmittel (C), das mindestens zwei H-aktive Gruppen, insbesondere aktive CH-Gruppen, aufweist. Grundsätzlich können die Verbindungen (B) aber auch anders gehärtet werden, wie beispielsweise durch Strahlenhärtung und dergleichen.

Geeignete Härter (C) sind beispielsweise solche, die zumindest zwei primäre und/oder sekundäre Aminogruppen enthalten (vgl. EP-Offenlegungsschrift 160 824 (HOE 85/F 036 J), wobei die primären Aminogruppen gegebenenfalls auch verkappt und beispielsweise als Ketimingruppen vorliegen können (vgl. EP-Offenlegungsschrift 203 296). Weiterhin lassen sich für diesen Zweck auch solche Verbindungen verwenden, die mindestens zwei Acetoacetatgruppen (vgl. EP-Offenlegungsschrift 160 824, DE-Offenlegungsschrift 3 710 431 und US-Patentschrift 4 408 018) oder mindestens zwei Malonatgruppen (vgl. EP-Offenlegungsschriften 160 824 und 161 697) aufweisen. Außerdem sind hier solche Härter mit mindestens zwei CH-Gruppen zu nennen, bei denen die CH-Gruppen jeweils durch drei elektronegative Gruppen aktiviert sind (vgl. (EP-Offenlegungsschriften 224 158 (HOE 85/F 257) und 310 011 (HOE 87/F 295). Es handelt sich hierbei beispielsweise um Methan-tricarbonsäureamid-Gruppen der Formel (I)

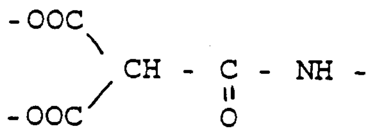
(I)

oder um Gruppen bzw. Struktureinheiten der Formeln (II)

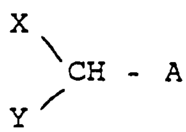
(II)

oder Formel (II') oder (II")

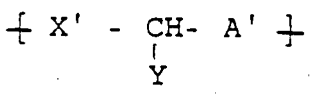
(II')

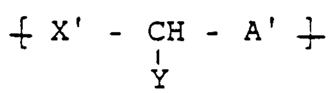
(II") ,

in denen bedeuten:

A =

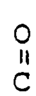
oder
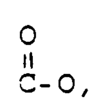

wobei die letztere Gruppe über das C-Atom an die CH-Gruppe gebunden ist;

X, Y = gleich oder verschieden

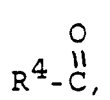

$CO_2R^4$ CN, $NO_2$, $CONH_2$, $CONR^4H$, $CONR^4$, wobei die Reste $R^4$ gleich oder verschieden

sein können und für einen Kohlenwasserstoffrest, vorzugsweise einen Alkylrest mit 1 bis 12 C-Atomen stehen, der auch durch Sauerstoff oder einen N-Alkylrest unterbrochen sein kann, mit der Maßgabe, daß nur einer der beiden Reste X, Y die $NO_2$-Gruppe darstellen kann;

A' =

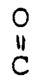 oder 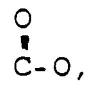

wobei die letztere Gruppe über das C-Atom an die CH-Gruppe gebunden ist;

X', Y' = gleich oder verschieden

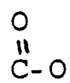 oder 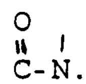

Auf vorstehende Druckschriften, einschließlich der darin beschriebenen bevorzugten Ausführungsformen, sei hier Bezug genommen.

Die Mengen von (B) und (C) wurden zumindest so gewählt, daß das Äquivalentverhältnis von H-aktiver Gruppe (aktives H-Atom) zu aktivierter Doppelbindung zumeist 2:1 bis 1:2, vorzugsweise etwa (0,5-1,5):1 bis etwa 1:(0,5-1,5) beträgt.

Bei den in der härtbaren Mischung vorhandenen Pigmenten (D) handelt es sich um die auf dem Lackgebiet üblichen Verbindungen wobei der Begriff "Pigmente" hier auch die auf dem Lackgebiet gebräuchlichen Füllstoffe umfassen soll. Derartige Pigmente sind beispielsweise beschrieben im Glasurit-Handbuch, Lacke und Farben, C.R. Vincentz-Verlag, Hannover (1984), 11. Aufl., S. 97-111. Genannt seien hier: Titandioxid, Talkum, Glimmer, Kaolin, Kreide, Quarzmehl, Asbestmehl, Schiefermehl, verschiedene Kieselsäuren, Silikate, Blanc fixe etc.

Die Menge an Pigment in der härtbaren Mischung beträgt im allgemeinen 30 bis 90 Gew.-%, vorzugsweise 50 bis 90 Gew.-%, bezogen auf (B), wobei die höheren Gehalte vor allem bei Füllersystemen zum Tragen kommen. Hier sind üblicherweise auch die Absetzprobleme am größten.

Als Verdünnungsmittel enthalten die härtbaren Mischungen gemäß der Erfindung die üblichen auf dem Lacksektor verwendeten Lösungsmittel. Beispielsweise seien hier genannt: halogenierte Kohlenwasserstoffe, Ether, wie Diethylether, Dimethoxydiglykol, 1,2-Dimethoxyethan, Tetrahydrofuran oder Dioxan; Ketone wie beispielsweise Methylethyketon, Aceton, Cyclohexanon und ähnliche; Alkohole, wie Methanol, Äthanol, Propanol, Butanol und Benzylalkohol, (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie ®Solvesso). Die Lösemittel können dabei einzeln oder im Gemisch eingesetzt werden.

Die gegebenenfalls in der härtbaren Mischung weiterhin vorhandenen Additive (E) sind gleichfalls die auf dem Lackgebiet üblichen Zusatzstoffe, wie Katalysatoren, Antioxidantien, (UV-)Stabilisatoren, Verlauf- bzw. Verdickungsmittel, Entschäumer und/oder Netzmittel, Reaktivverdünner, zusätzliche Härter und zusätzliche härtbare Verbindungen udgl.. Diese Additive können der Mischung gegebenenfalls erst unmittelbar vor der Verarbeitung zugegeben werden.

Als Katalysatoren kommen die für die Michael-Addition bekannten Verbindungen, insbesondere Lewis-Basen oder Brönstedt-Basen in Frage. Geeignete Katalysatoren finden sich beispielsweise in den EP-Offenlegungsschriften 224 158 und 310 011, auf die hier wiederum Bezug genommen wird.

Die Herstellung der härtbaren Mischung und deren Anwendung zur Herstellung von Formkörpern und insbesondere von Überzügen oder Zwischenbeschichtungen, ist aus dem Stand der Technik bekannt, wie er sich beispielsweise aus den oben genannten EP-Offenlegungsschriften ergibt.

Insbesondere eignen sich die erfindungsgemäßen härtbaren Mischungen als Füllerlack. Daneben können sie auch als pigmentierte Decklacke Verwendung finden.

Die nachfolgenden Beispiele erläutern die Erfindung. % bedeutet darin jeweils Gew.-% und T jeweils Gew.-Teile.

## Beispiele

### 1. Herstellung der dopelbindungshaltigen Komponente (B)

300 T Xylol und 0,75 T tert. Butylperbenzoat wurden in einem 4 l-Dreihalskolben, der mit Rührer, Tropftrichter und Rückflußkühler bestückt war, zum Rückfluß erhitzt.

Binnen 6 h wurde unter Rühren eine Monomermischung, bestehend aus 450 T Glycidylmethacrylat, 300 T Styrol, 15 T tert. Butylperbenzoat und 15 T $\alpha$-dim. Methylstyrol zugetropft. Anschließend ließ man 2 h lang nachpolymerisieren und verdünnte dann mit 150 Teilen Xylol. Nach Abkühlung auf 100 °C wurden 5,0 T 2,6-Di-tert.-butyl-4-methylphenol und 0,3 T Chrom-III-2-ethylhexanoat zugesetzt. Danach wurden unter Durchleiten von Luft 220 Teile Acrylsäure binnen 1 h zudosiert. Anschließend ließ man bei 110 °C bis zu einer Säurezahl von < 0,8 nachrühren und verdünnte dann mit Butylacetat auf einen Feststoffgehalt von 50 %. Es wurde eine klare Harzlösung mit einem C = C-Äquivalentgewicht von 680 g/mol erhalten.

### 2. Mischungen aus (A) und (B)

a) 500 T der Harzlösung aus Versuch 1 wurden in einem 2 l-Dreihalskolben, der mit einem Rührer und einem Innenthermometer bestückt war, auf Raumtemperatur abgekühlt und unter Rühren mit 13,9 T Benzylamin versetzt. Anschließend wurden unter weiterem Rühren und unter Kühlung 10,9 Teile Hexamethylendiisocyanat binnen 15 min zugetropft. Man rührte anschließend noch 10 min und verdünnte dann mit 25 T Butylacetat.

Es wurde eine weiße trübe Harzlösung mit einem C = C-Äquivalentgewicht von 760 g/mol und einem Harnstoffgehalt (MG:60) von 1,4 % erhalten.

b) Versuch 2 a) wurde wiederholt, es wurden jedoch 5,5 T Hexamethylendiisocyanat und 7,0 T Benzylamin eingesetzt. Nach Verdünnen mit 13 T Butylacetat wurde eine weiße trübe Harzlösung mit einem C = C-Äquivalentgewicht von 730 g/mol und einem Harnstoffgehalt von 0,75 % erhalten.

c) Versuch 2a) wurde wiederholt, es wurden jedoch 13,0 T Hexylamin, 11,2 T ®Desmodur T 80 (80:20 Gemisch von 2,4- und 2,6-Toluylendiisocyanat) und 25 T Butylacetat eingesetzt.

| | |
|---|---|
| C = C-Äquivalentgewicht: | 760 g/mol |
| Harnstoffgehalt: | 1,4 % |

d) 25,3 T Hexylamin wurden in 250 T Toluol gelöst und bei Raumtemperatur tropfenweise unter kräftigem Rühren mit 21 T Hexamethylendiisocyanat versetzt. Der entstandene Niederschlag wurde abgesaugt und bei 50 °C im Vakuum getrocknet.

Ausbeute: 43,6 T; Schmelzpunkt: 182-184 °C.

Anschließend wurden 500 T der Harzlösung aus Versuch 1 mit 26 T des kristallinen Niederschlages und 26 T Butylacetat versetzt und eine Stunde lang mit einer Perlmühle innig verrieben. Man erhielt eine trübe Harzlösung mit einem C = C-Äquivalentgewicht von 770 g/mol und einem Harnstoffgehalt vom 1,5 %.

e) 10,9 T Hexylamin wurden in 20 T Butylacetat gelöst und unter starkem Rühren bei Raumtemperatur mit Kohlendioxyd gesättigt. Nach beendeter Reaktion wurden 500 T der Harzlösung aus Versuch 1 zugesetzt und anschließend tropfenweise mit 90 T Hexamethylendiisocyanat versetzt. Man erhielt eine trübe Harzlösung mit einem C = C-Äquivalentgewicht von 750 g/mol und einem Harnstoffgehalt von 1,2 %.

f) Versuch 2e) wurde wiederholt, es wurden jedoch 10,7 T Hexylamin, 20 T Butylacetat und 9,3 T 2,4-Toluylendiisocyanat eingesetzt.

| | |
|---|---|
| C = C-Äquivalentgewicht: | 750 g/mol |
| Harnstoffgehalt: | 1,2 %. |

g) Versuch 2e) wurde wiederholt, es wurden jedoch 8,1 T $_m$-Xylylendiamin, 20 T Butylacetat und 11,9 T Butylisocyanat eingesetzt.

| | |
|---|---|
| C = C-Äquivalentgewicht:<br>Harnstoffgehalt: | 760 g/mol<br>1,3 %. |

h) Versuch 2e) wurde wiederholt, es wurden jedoch 14 T Benzylamin, 25 T Butylacetat und 11,4 T 2,4-Toluylendiisocyanat eingesetzt.

| | |
|---|---|
| C = C-Äquivalentgewicht:<br>Harnstoffgehalt: | 760 g/mol<br>1,4 %. |

**3. Herstellung der Härterkomponente (C)**

110,6 T Diethanolamin und 122 T Dimethyldiglykolether wurden in einem 4 l-Dreihalskolben auf 110 °C erhitzt und binnen 1 h mit 987 T eines Bisphenol A-Diglycidylethers mit einem Epoxid-Äquivalentgewicht von ca. 875-1000 (®Beckopox EP 304) versetzt. Anschließend ließ man bei 110 °C solange nachrühren, bis der Epoxidgehalt < 0,2 % war. Nach Zugabe von 820 Teilen Acetessigsäureethylester und 4 Teilen Dibutylzinndilaurat wurde 3 h lang zum Rückfluß erhitzt, und die flüchtigen Bestandteile wurden bei Normaldruck bis zu einer Sumpftemperatur von 140 °C abdestilliert.

Nach Anlegen von Wasserstrahlvakuum wurde dann der überschüssige Acetessigsäureethylester abdestilliert. Nach Verdünnen mit Butylacetat auf einen Feststoffgehalt von 60 % erhielt man eine klare gelbe Harzlösung mit einem C-H-Äquivalentgewicht von 800 g/mol.

**4. Herstellung der Lacke**

Die Bindemittel wurden mit einer Pigmentmischung, die aus 100 T Kaolin, 100 T Blanc fixe, 50 Teilen Titandioxid und 50 T Talkum bestand, sowie mit Lösungsmittel und gegebenenfalls mit Antiabsetzmittel (A) versetzt (vgl. hierzu die nachfolgende Tabelle). Nach einem Tag wurde durch Abreiben mit einer Perlmühle der Lack homogenisiert.

Der so erhaltene Lack wurde mit Härter und Katalysator versetzt und mit Butylacetat auf eine Spritzviskosität von 20 sec (DIN-Becher 4 mm) eingestellt. Der Lack wurde mit 200 µm Naßfilmstärke auf Glasplatten aufgerakelt und bei Raumtemperatur getrocknet. Die Ergebnisse sind gleichfalls aus der nachstehenden Tabelle ersichtlich:

Tabelle

| Beispiel: | Vergleich 1 | Vergleich 2 | Beispiele 1 | 2 | 3 | 4 | 5 | 6 | 7 | 8 |
|---|---|---|---|---|---|---|---|---|---|---|
| Lack: | | | | | | | | | | |
| Bindemittel (B) | | | | | | | | | | |
| Versuch 1 | 150 | 150 | | | | | | | | |
| Versuch 2 a) | | | 150 | | | | | | | |
| Versuch 2 b) | | | | 150 | | | | | | |
| " 2 c) | | | | | 150 | | | | | |
| " 2 d) | | | | | | 150 | | | | |
| " 2 e) | | | | | | | 150 | | | |
| " 2 f) | | | | | | | | 150 | | |
| " 2 g) | | | | | | | | | 150 | |
| " 2 h) | | | | | | | | | | 150 |
| Pigmentmischung[1)] | 300 | 300 | 300 | 300 | 300 | 300 | 300 | 300 | 300 | 300 |
| Butylacetat | 150 | 132,5 | 150 | 150 | 150 | 150 | 150 | 150 | 150 | 150 |
| ®Bentone 34 [2)] | - | 17,5 | - | - | - | - | - | - | - | - |
| Härter (C) | | | | | | | | | | |
| Versuch 3 | 120 | 120 | 120 | 120 | 120 | 120 | 120 | 120 | 120 | 120 |
| Katalysator (Triphenylphosphin) | 2,25 | 2,25 | 2,25 | 2,25 | 2,25 | 2,25 | 2,25 | 2,25 | 2,25 | 2,25 |
| Butylacetat ca. | 60 | 70,0 | 65 | 65 | 85 | 65 | 60 | 54 | 51 | 60, |
| Ergebnisse: | | | | | | | | | | |
| Topfzeit (h) | 4 | 4¼ | 4¼ | 4½ | 4¼ | 4¾ | 4¾ | 4½ | 4 | 4 |
| Superbenzinbeständigkeit | i.o. | i.o. | i.o | i.o | i.o | i.o | i.o | i.o | i.o | i.o |
| Absetzverhalten | starker Bodensatz | Bodensatz | i.o | i.o | i.o | i.o | i.o | i.o | i.o | i.o |

1) Zusammensetzung siehe Seite 16
2) ®Bentone 34 (10 % Suspension in Xylol)= herkömmliches Thixotropie- und Verdickungsmittel auf Basis organ. modifizierter Silikate.

## Patentansprüche

1. Verfahren zur Vermeidung der Absetzung von Pigmenten (D) in flüssigen, härtbaren und pigmenthaltigen Mischungen, dadurch gekennzeichnet, daß man den Mischungen Harnstoffgruppen tragende Verbindungen (A) als Antiabsetzmittel zugibt.

2. Verfahren nach Anspruch 1, dadurch gekennzeichnet, daß man als Verbindung (A) einen Mono- oder Polyharnstoff nimmt.

3. Verfahren nach Anspruch 1 und/oder 2, dadurch gekennzeichnet, daß man als Verbindung (A) ein Umsetzungsprodukt eines Monoamins (a) mit einem Diisocyanat (b) nimmt.

4. Verfahren nach mindestens einem der Ansprüche 1 bis 3, dadurch gekennzeichnet, daß die Verbindungen (A) in Mengen von 1 bis 30 Gew.-%, bezogen auf die Gesamtmenge (Feststoff) der härtbaren Mischung, eingesetzt werden.

5. Verfahren nach mindestens einem der Ansprüche 1 bis 4, dadurch gekennzeichnet, daß man solche Verbindungen (A) nimmt, die 1 bis 5 Harnstoffgruppen pro Molekül enthalten.

6. Verfahren nach mindestens einem der Ansprüche 1 bis 5, dadurch gekennzeichnet, daß man den härtbaren Mischungen Verbindungen (B) zugibt, die mindestens zwei freie, aktivierte Doppelbindungen aufweisen.

7. Verfahren nach Anspruch 6, dadurch gekennzeichnet, daß man Verbindungen (B) nimmt, die sich von Polymeren aus der Gruppe Acrylharze, Polyesterharze, Epoxidharze und Urethanharze ableiten.

8. Verfahren nach mindestens einem der Ansprüche 1 bis 7, dadurch gekennzeichnet, daß man den härtbaren Mischungen auch Vernetzungsmittel (C) mit mindestens zwei H-aktiven Gruppen, vorzugsweise aktiven CH-Gruppen, und daneben gegebenenfalls übliche Additive (E) zugibt.

9. Verfahren nach Anspruch 8, dadurch gekennzeichnet, daß man als Vernetzungsmittel (C) solche nimmt, die Acetoacetat-, Malonat- oder CH-Gruppen enthalten, die durch drei elektronegative Gruppen aktiviert sind.

10. Verfahren nach mindestens einem der Ansprüche 1 bis 9, dadurch gekennzeichnet, daß die Verbindungen (A) und (B) in Mischung den härtbaren Mischungen zugegeben werden.

11. Verfahren nach Anspruch 6, dadurch gekennzeichnet, daß man als Verbindungen (B) solche nimmt, deren C=C-Äquivalentgewicht zwischen 85 und 1800 liegt.

12. Verfahren nach Anspruch 8, dadurch gekennzeichnet, daß man als Vernetzungsmittel (C) solche nimmt, die CH-Gruppen enthalten, die mit drei elektronegativen Gruppen verbunden sind.

## Claims

1. A method for avoiding sedimentation of pigments (D) in liquid, curable and pigment-containing mixtures, which comprises adding to the mixtures compounds (A) carrying urea groups, as antisettling agents.

2. The method as claimed in claim 1, wherein a mono- or polyurea is taken as compound (A).

3. The method as claimed in claim 1 and/or 2, wherein a reaction product of a monoamine (a) with a diisocyanate (b) is taken as compound (A).

4. The method as claimed in at least one of claims 1 to 3, wherein compounds (A) are used in amounts of 1 to 30 % by weight, relative to the total amount (solid) of the curable mixture.

5. The method as claimed in at least one of claims 1 to 4, wherein compounds (A) which contain 1 to 5 urea groups per molecule are taken.

6. The method as claimed in at least one of claims 1 to 5, wherein compounds (B) having at least two free activated double bonds are added to the curable mixtures.

7. The method as claimed in claim 6, wherein said compounds (B) are derived from polymers from the group consisting of acrylic resins, polyester resins, epoxy resins and urethane resins.

8. The method as claimed in at least one of claims 1 to 7, wherein the curable mixtures also have added to them crosslinking agents (C) containing at least two active hydrogen groups, preferably active CH groups, and in addition, if desired, conventional additives (E).

9. The method as claimed in claim 8, wherein the said crosslinking agents (C) contain acetoacetate, malonate or CH groups which are activated by three electronegative groups.

10. The method as claimed in at least one of claims 1 to 9, wherein compounds (A) and (B) are added as a mixture to the curable mixtures.

11. The method as claimed in claim 6, wherein said compounds (B) have a C = C equivalent weight between 85 and 1,800.

12. The method as claimed in claim 8, wherein said crosslinking agents (C) contain CH groups linked to three electronegative groups.

**Revendications**

1. Procédé afin d'éviter la sédimentation de pigments (D) dans des mélanges liquides, durcissables et contenant des pigments, caractérisé en ce qu'on ajoute, aux mélanges, des composés (A) portant des groupes urée en tant qu'agents de suspension.

2. Procédé selon la revendication 1, caractérisé en ce qu'on prend comme composé (A) une mono- ou une polyurée.

3. Procédé selon la revendication 1 et/ou 2, caractérisé en ce qu'on prend comme composé (A) un produit de réaction entre une monoamine (a) et un diisocyanate (b).

4. Procédé selon au moins l'une des revendications 1 à 3, caractérisé en ce que les composés (A) sont utilisés dans une quantité comprise entre 1 et 30 % en poids, par rapport à la quantité totale (de matières solides) du mélange durcissable.

5. Procédé selon au moins l'une des revendications 1 à 4, caractérisé en ce qu'on prend des composés (A) tels qu'ils contiennent de 1 à 5 groupes urée par molécule.

6. Procédé selon au moins l'une des revendications 1 à 5, caractérisé en ce qu'on ajoute au mélange durcissable des composés (B), qui possèdent au moins deux doubles liaisons libres, activées.

7. Procédé selon la revendication 6, caractérisé en ce qu'on prend des composés (B) qui dérivent de polymères appartenant au groupe des résines acryliques, des résines en polyester, des résines époxy et des résines uréthanne.

8. Procédé selon au moins l'une des revendications 1 à 7, caractérisé en ce qu'on ajoute au mélange durcissable aussi des agents de réticulation (C) ayant au moins deux groupes H-actifs, de préférence des groupes CH actifs, et à côté de cela éventuellement des additifs (E) classiques.

9. Procédé selon la revendication 8, caractérisé en ce qu'on prend comme agent de réticulation (C) ceux qui contiennent des groupes acétoacétate, malonate ou CH, qui sont activés par trois groupes électronégatifs.

10. Procédé selon au moins l'une des revendications 1 à 9, caractérisé en ce qu'on ajoute les composés (A) et (B) en mélange dans le mélange durcissable.

11. Procédé selon la revendication 6, caractérisé en ce qu'on prend comme composé (B) ceux dont le poids en équivalents de C = C se situe enter 85 et 1800.

12. Procédé selon la revendication 8, caractérisé en ce qu'on prend comme composé de réticulation (C) ceux qui contiennent des groupes CH qui sont liés à trois groupes électronégatifs.